**Europäisches Patentamt**

(19) **European Patent Office**

**Office européen des brevets**

(11) Veröffentlichungsnummer: **0 132 251**
**B1**

(12) # EUROPÄISCHE PATENTSCHRIFT

(45) Veröffentlichungstag der Patentschrift:
**04.11.87**

(21) Anmeldenummer: **84890101.3**

(22) Anmeldetag: **30.05.84**

(51) Int. Cl.⁴: **F 16 L 59/00,** E 04 H 7/02,
G 21 C 11/08, B 65 D 90/08,
F 17 C 3/02

(54) **Isolierung für Speicher.**

(30) Priorität: **14.07.83 AT 2581/83**

(43) Veröffentlichungstag der Anmeldung:
**23.01.85 Patentblatt 85/4**

(45) Bekanntmachung des Hinweises auf die Patenterteilung:
**04.11.87 Patentblatt 87/45**

(84) Benannte Vertragsstaaten:
**BE CH DE FR GB IT LI LU NL SE**

(56) Entgegenhaltungen:
**AT-A-377 310**
**CH-A-632 576**
**DE-A-2 349 601**
**DE-A-3 042 644**

(73) Patentinhaber: **GREINER K.G., Greinerstrasse 70,
A-4550 Kremsmünster Oberösterreich (AT)**

(72) Erfinder: **Weingartner, Rudolf, Grundstrasse 22
A-4501 Neuhofen a.d. Krems, Oberösterreich (AT)**

(74) Vertreter: **Krause, Ernst, Dipl.- Ing., Krause, Ernst,
Dipl.- Ing. Casati, Wilhelm, Dipl.- Ing P.O. Box
234 Amerlingstrasse 8, A-1061 Wien VI (AT)**

EP 0 132 251 B1

**Beschreibung**

Die Erfindung bezieht sich auf eine Isolierung für Speicher, insbesondere Großspeicher, bei welcher vorgeformte Isolierkörper um den Speicher an diesem anliegend herumgelegt und miteinander verbunden sind, wobei die Isolierkörper als längliche Platten ausgebildet sind, bei denen in an sich bekannter Weise in einer Längsschmalseite wenigstens eine Nut und an der anderen Längsschmalseite wenigstens ein Verbindungsansatz vorgesehen ist, wobei die Nut und der Verbindungsansatz formgleich ineinanderpassende Querschnitte aufweisen und zum Anschluß der Platten unter verschiedenen Winkeln zueinander die Querschnitte von Nut und Verbindungsansatz kreisbogenförmig begrenzt sind, wobei die Bogenlänge des Querschnittes der Nut größer als ein Halbkreisbogen ist und die Bogenlänge des Querschnittes des Verbindungsansatzes noch größer als jene des Querschnittes der Nut ist, wobei vorzugsweise die Platten wenigstens an ihrer dem Speicher abgewandten Seite mit einer Deckschicht, z. B. aus Aluminium versehen sind. Eine solche Isolierung ist aus AT-A-37 731 bekannt.

Bei dieser Ausbildung müssen die Formkästen zur Herstellung der Formkörper genau die entsprechende Negativform aufweisen, was einerseits hinsichtlich des Formenbaues und anderseits beim Entformen nachteilig ist. Außerdem kann der Verbindungsansatz bzw. die Profilnut beim Transport bzw. beim Ineinanderschieben zur Verbindung zweier Isolierkörper leicht beschädigt werden.

Die Erfindung stellt sich die Aufgabe, die länglichen Platten einer solchen Isolierung leicht und ohne besonderen Aufwand herzustellen und dabei so auszubilden, daß sie robust bei der Handhabung und sicher gegen Beschädigung, insbesondere beim Transport, ist.

Erfindungsgemäß besteht die Lösung dieser Aufgabe darin, daß die Profilnut und der Verbindungsansatz durch vorgefertigte, harte, vorzugsweise extrudierte und aus Polyvinylchlorid (PVC) gefertigte, Profilstücke gebildet sind. Dadurch ist eine genaue Formgebung und damit eine entsprechende Paßgenauigkeit gegeben, wobei auch bei starken Beanspruchungen ein Ausbrechen der Profilnut verhindert ist.

Vorteilhafterweise können die Profilstücke durch Anschäumen mit dem Formsegment verbunden sein, wodurch eine besonders einfache Fertigung erreicht ist, da die Profilstücke als Teil der Formwandung herangezogen werden können, so daß der Formkasten wesentlich einfacher ausgebildet sein kann, u. zw. sowohl hinsichtlich des Aufbaues als auch bezüglich der Handhabung.

Ferner können die Profilstücke als Kastenprofile ausgebildet sein, wodurch eine besonders hohe Stabilität der Profilstücke erzielt ist.

Um eine besonders gute Anpassung an die Krümmung des zu isolierenden Speichers zu erreichen, kann die Öffnung der Profilnut unter Bildung einer längeren Flanke und einer kürzeren Flanke in Richtung zum Speicher hin verschwenkt sein.

Zur Abdeckung des außenliegenden Spaltes im Verbindungsbereich zweier Formsegmente kann an der dem Speicher abgewandten Seite des Formsegments eine, vorzugsweise koaxial zum Mantel des Verbindungsansatzes verlaufende Abdecklasche vorgesehen sein, wodurch eine zusätzliche Isolierwirkung in diesem Bereich gegeben und ein Eindringen von Wasser in die Verbindungsfuge verhindert ist.

Zum leichteren Zusammenbau der einzelnen Formsegmente kann ein Teil der im wesentlichen zylindrischen Mantelfläche des Verbindungsansatzes durch einen ebenen, parallel zur Längsachse des Verbindungsansatzes verlaufenden Bereich gebildet sein. In besonders vorteilhafter Weise kann dabei der ebene Bereich seitlich in dem der kürzeren Flanke der Profilnut zugewandten Teil des Verbindungsansatzes angeordnet sein.

In der Zeichnung sind zwei Ausführungsbeispiele des Erfindungsgegenstandes dargestellt;

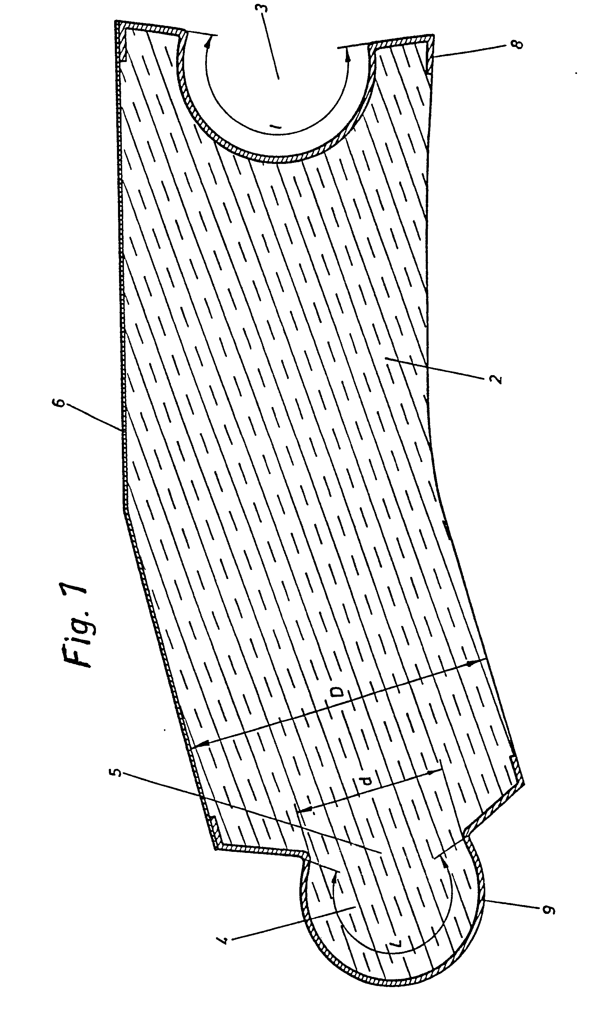

Fig. 1 zeigt einen Horizontalschnitt eines Formsegmentes gemäß der ersten Ausführungsform, und

Fig. 2 gibt im Detail die Verbindung zweier Formsegmente bei der zweiten Ausführungsform wieder.

Ein einen der Isolierkörper bildendes Formsegment 2 weist in der einen Längsschmalseite eine Profilnut 3 und an der gegenüberliegenden Längsschmalseite einen Verbindungsansatz 4 auf, wobei der Verbindungsansatz 4 und die Profilnut 3 formgleich ineinanderpassen. Im Grundriß weisen die beiden Teile kreisbogenförmiges Profil auf, wobei die Bogenlänge 1 der Profilnut 3 über die Hälfte der Bogenlänge eines gesamten Kreises umfaßt und die Bogenlänge L des Verbindungsansatzes 4 größer ist als jene der Profilnut 3. Der Verbindungsansatz 4 ist über einen Verbindungsabschnitt 5 mit dem Formsegment 2 verbunden, wobei die Dicke d des Verbindungsabschnittes mindestens die Hälfte der Dicke D des Formsegmentes 2 beträgt. An der als Außenseite vorgesehenen Fläche des Formsegments 2 ist eine wetterfeste Deckschicht 6, z. B. eine Aluminiumdeckschicht, vorgesehen.

Die Oberflächen der Profilnut 3 bzw. des Verbindungsansatzes 4 sind durch vorgefertigte, harte, einfache Profilstücke 8 bzw. 9 gebildet, welche beispielsweise aus PVC durch Extrudieren hergestellt sind. Die Profilstücke 8, 9 erstrecken sich dabei über die gesamte Breite der Längsschmalseite des Formsegments 2 und sind an letzterem durch Anschäumen verbunden.

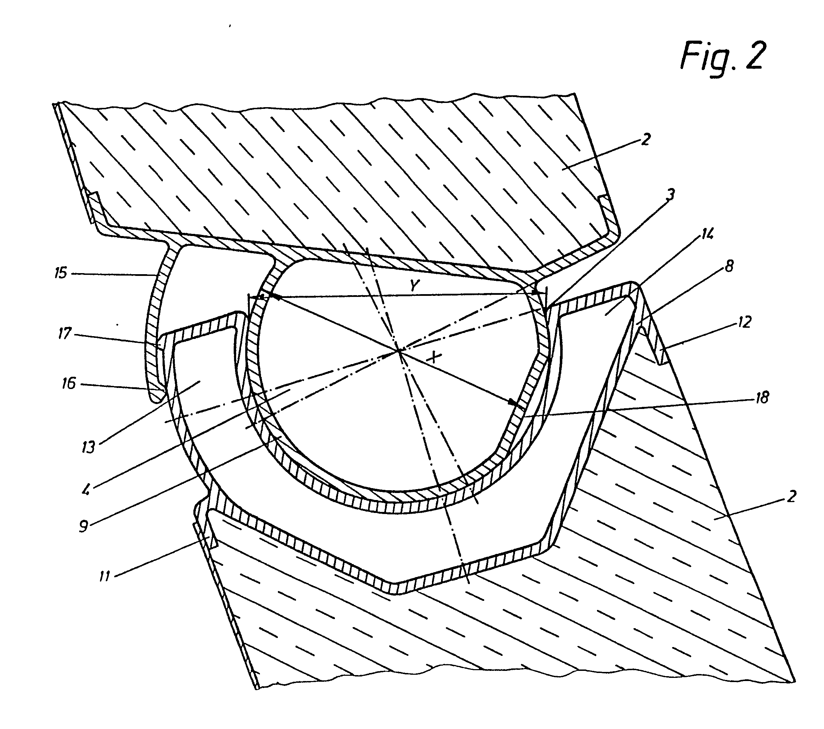

Bei der Ausführungsvariante gemäß Fig. 2 ist das die Profilnut 3 tragende Profilstück 8 als Kastenprofil ausgebildet, das an seinen Längsseitenkanten Ansatzstücke 11, 12 trägt, deren Außenflächen bündig mit der Außenfläche des Formsegments 2 abschließen. Die Öffnung der Profilnut 3 ist dabei schräg zu jener Seite hin gerichtet, die zur Anlage an den Speicher bestimmt ist, wobei solcherart eine längere Seitenflanke 14 und eine kürzere Seitenflanke 14 entsteht.

An dem den Verbindungsansatz 4 tragenden, gleichfalls als Kastenprofil ausgebildeten Profilstück 9 ist eine parallel zur Krümmung des Mantels des Verbindungsansatzes 4 verlaufende Abdecklasche 15 angebracht, u. zw. in einem Abstand, der etwa der Dicke der längeren Seitenflanke 13 entspricht, an welcher die Abdecklasche von außen her anliegt. Zur besseren Abdichtung ist an der Innenseite der Abdecklasche 15 eine entlang der freien Kante verlaufende Rippe 16 und an der Außenseite der längeren Flanke 13 eine ebenfalls entlang der freien Kante derselben verlaufende Rippe 17 angeordnet, wobei zufolge der Elastizität des Materials die Rippe 16 an der Außenseite der längeren Planke und die Rippe 17 an der Innenseite der Abdecklasche anliegt.

An der nach innen gewandten Seite weist der Verbindungsansatz 4 einen ebenen Bereich 18 auf, welcher parallel zur Längsachse des Verbindungsansatzes verläuft. Die Außenabmessung X des Verbindungsansatzes 4 im Mittelteil des ebenen Bereiches 18 ist dabei etwas geringer als der Abstand Y der Innenkanten der freien Enden der Flanken 13, 14, wodurch ein leichtes Einschieben des Verbindungsansatzes 4 in die Profilnut 3 dann ermöglicht ist, wenn die zu verbindenden Formsegmente den entsprechenden Winkel zueinander aufweisen. Sind die Formsegmente dann nach außen verschwenkt, so umgreift die Profilnut den Verbindungsansatz derart, daß ein Herausgleiten des letzteren nicht möglich ist.

**Patentansprüche**

1. Isolierung für Speicher, insbesondere für Großspeicher, bei welcher vorgeformte Isolierkörper um den Speicher an diesem anliegend herumgelegt und miteinander verbunden sind, wobei die Isolierkörper als längliche Platten ausgebildet sind, bei denen in an sich bekannter Weise in einer Längsschmalseite wenigstens eine Profilnut (3) und an der anderen Längsschmalseite wenigstens ein Verbindungsansatz (4) vorgesehen ist, wobei die Profilnut (3) und der Verbindungsansatz (4) formgleich ineinanderpassende Querschnitte aufweisen und zum Anschluß der Platten unter verschiedenen Winkeln zueinander die Querschnitte von Profilnut (3) und Verbindungsansatz (4) kreisbogenförmig begrenzt sind, wobei die Bogenlänge des Querschnittes der Profilnut (3) größer als ein Halbkreisbogen ist und die Bogenlänge des Querschnittes des Verbindungsansatzes (4) noch größer als jene des Querschnittes der Profilnut (3) ist, wobei vorzugsweise die Platten wenigstens an ihrer dem Speicher abgewandten Seite mit einer Deckschicht, z. B. aus Aluminium versehen sind, dadurch gekennzeichnet, daß die Profilnut (3) und der Verbindungsansatz (4) durch vorgefertigte harte, vorzugsweise extrudierte und aus PVC gefertigte, Profilstücke (8,9) gebildet sind.

2. Isolierung nach Anspruch 1, dadurch gekennzeichnet, daß die Profilstücke (8, 9) durch Anschäumen mit den Formsegmenten (2) verbunden sind.

3. Isolierung nach Anspruch 1 oder 2, dadurch gekennzeichnet, daß die Profilstücke (8, 9) als Kastenprofile ausgebildet sind.

4. Isolierung nach einem der Ansprüche 1 bis 3, dadurch gekennzeichnet, daß die Öffnung der Profilnut (3) unter Bildung einer längeren Flanke (13) und einer kürzeren Flanke (14) in Richtung zum Speicher hin verschwenkt ist.

5. Isolierung nach einem der Ansprüche 1 bis 4, dadurch gekennzeichnet, daß an der dem Speicher abgewandten Seite des Formsegments (2) eine, vorzugsweise koaxial zum Mantel des Verbindungsansatzes (4) verlaufende Abdecklasche (15) vorgesehen ist.

6. Isolierung nach Anspruch 5, dadurch gekennzeichnet, daß die Abdecklasche (15) an der Außenseite der an der dem Speicher abgewandten Seite vorgesehenen längeren Flanke (13) der Profilnut (3) anliegt.

7. Isolierung nach einem der Ansprüche 1 bis 6, dadurch gekennzeichnet, daß ein Teil der im wesentlichen zylindrischen Mantelfläche des Verbindungsansatzes (4) durch einen ebenen, parallel zur Längsachse des Verbindungsansatzes verlaufenden Bereich (18) gebildet ist.

8. Isolierung nach Anspruch 7, dadurch gekennzeichnet, daß der ebene Bereich (18) seitlich in dem der kürzeren Flanke (14) der Profilnut (3) zugewandten Teil des Verbindungsansatzes (4) angeordnet ist.

**Claims**

1. An insulation for storage structures, particularly for large storage structures, wherein interconnected preformed insulating members extend around and contact the storage structure and consist of elongate slabs, which in a manner known per se are provided on one narrow longitudinal side with at least one profiled groove (3) and on the other narrow longitudinal side with at least one connecting extension (4), the profiled groove (3) and the connecting extension (4) have identically shaped, interfitting cross-sections, the cross-sections of the profiled groove (3) and of the connecting extension (4) are defined by arcs of a circle so that the slabs can be joined at different angles to each other, the arc length of the cross-section of the profiled groove (3) exceeds a semicircular arc and the arc length of the cross-section of the connecting extension (4) exceeds the arc length of the profiled groove (3), and the slabs are preferably provided at least on that side which faces away from the storage structure with a cover layer, e.g., of aluminium, characterized in that the profiled groove (3) and the connecting extension (4) are constituted by prefabricated hard profiled elements (8, 9), which are preferably extruded and made from PVC.

2. An insulation according to claim 1, characterized in that the profiled elements (8, 9) are joined to the shape segments (2) by formed-in-situ foam.

3. An insulation according to claim 1 or 2, characterized in that the profiled elements (8, 9) consist of box sections.

4. An insulation according to any of claims 1 to 3, characterized in that the opening of the profiled groove (3) has been turned toward the storage structure with formation of a longer side face (13) and a shorter side face (14).

5. An insulation according to any of claims 1 to 4, characterized in that a cover lug (15) extending to the periphery of the connecting extension (4) is provided on that side of the shaped segment (2) which faces away from the storage structure.

6. An insulation according to claim 5, characterized in that the cover lug (15) is in contact on the outside of the longer side face (13) of the profiled groove (3), which longer side face (13) is provided on the side that faces away from the storage structure.

7. An insulation according to any of claims 1 to 6, characterized in that a part of the substantially cylindrical peripheral surface of the connecting extension (4) is constituted by a planar portion (18), which is parallel to the longitudinal axis of the connecting extension.

8. An insulation according to claim 7, characterized in that the planar portion (18) is laterally disposed in that portion of the connecting extension (4) which faces the shorter side face (14) of the profiled groove (3).

**Revendications**

1. Isolation pour réservoir, principalement pour réservoir de grande capacité, dans lequel des éléments isolants preformés sont disposés autour du réservoir, adjacents à ce dernier et reliés les une aux autres, les éléments isolants étant des plaques de forme allongée dans lesquelles, de façon connue en soi, il est prevu sur un côté longitudinal étroit au moins une gorge profilée (3) et sur l'autre côté longitudinal étroit au moins une partie en saillie (4), la gorge profilée (3) et la partie en saillie (4) présentant des sections complémentaires et, pour l'assemblage des plaques selon différents angles, les sections de la gorge profilée (3) et de la partie en saillie (4) étant délimités par un arc de cercle, la longueur de l'arc de la section de la gorge profilée (3) étant supérieure à un demicercle et la longueur de l'arc de la section de la partie en saillie (4) étant encore supérieure à celle de la section de la gorge profilée (3), les plaques étant de préférence, au moins sur leur face opposée au réservoir, pourvues d'une couche de revêtement, par exemple d'aluminium, caractérisée en ce que la gorge profilée (3) et la partie en saillie (4) sont formées des pièces profilées (8, 9) en PVC, dures, préfabriquées, de préférence extrudées.

2. Isolation pour réservoir selon la revendication 1, caractérisée en ce que les pièces profilées (8, 9) sont liées par l'intermédiaire de mousse aux segments façonnés (2).

3. Isolation pour réservoir selon la revendication 1 ou la revendication 2, caractérisée en ce que les pièces profilées (8, 9) sont des profilés en forme de caissons.

4. Isolation pour réservoir selon l'une quelconque des revendications 1 à 3, caractérisée en ce que, par formation d'un flanc plus long (13) et d'un flanc plus court (14), l'ouverture de la gorge profilée (3) est tournée vers l'intérieur en direction du réservoir.

5. Isolation pour réservoir selon l'une quelconque des revendications 1 à 4, caractérisée en ce qu'il est prévu, sur la face des segments façonnés (2) opposée au réservoir, un collier de recouvrement (15), de préférence coaxial à l'enveloppe de l'élément en saillie (4).

6. Isolation pour réservoir selon la revendication 5, caractérisée en ce que le collier de recouvrement (15) est placé sur la face externe du flanc le plus long (13) de la gorge profilée (3), prévu sur la face opposée au réservoir.

7. Isolation pour réservoir selon l'une quelconque des revendications 1 à 6, caractérisée en ce qu'une partie de la surface de l'enveloppe essentiellement cylindrique de la partie en saillie (4) est formée par une zone plane (18), parallèle à l'axe longitudinal de la partie en saillie.

8. Isolation pour réservoir selon la revendication 7, caractérisée en ce que la zone plane (18) est disposée latéralement dans la portion de la partie en saillie (4) opposée au flanc le plus court de la gorge profilée (3).

*Fig. 1*

0 132 251

Fig. 2

0 132 251